(19) Europäisches Patentamt
European Patent Office
Office européen des brevets

(11) **EP 4 462 707 A1**

(12) **EUROPEAN PATENT APPLICATION**
published in accordance with Art. 153(4) EPC

(43) Date of publication:
**13.11.2024 Bulletin 2024/46**

(21) Application number: **22919072.3**

(22) Date of filing: **22.12.2022**

(51) International Patent Classification (IPC):
**H04L 1/18** (2023.01)   **H04L 5/00** (2006.01)

(52) Cooperative Patent Classification (CPC):
**H04L 1/18; H04L 5/00**

(86) International application number:
**PCT/KR2022/021086**

(87) International publication number:
**WO 2023/132535 (13.07.2023 Gazette 2023/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.01.2022 KR 20220002920**

(71) Applicant: **LG Electronics Inc.**
**Yeongdeungpo-gu**
**Seoul 07336 (KR)**

(72) Inventors:
• **KIM, Seonwook**
  **Seoul 06772 (KR)**
• **YANG, Suckchel**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND APPARATUS FOR TRANSMITTING AND RECEIVING CONTROL INFORMATION IN WIRELESS COMMUNICATION SYSTEM**

(57)    A method and apparatus for transmitting and receiving control information in a wireless communication system are disclosed. The method performed by user equipment in a wireless communication system, according to an embodiment of the present disclosure, may comprise the steps of: receiving configuration information regarding a serving cell that configures a plurality of bandwidth parts (BWPs) for which different numbers of hybrid automatic repeat request (HARQ) processes are configured; receiving at least one physical downlink shared channel (PDSCH) in the serving cell; and transmitting HARQ-ACK information regarding the at least one PDSCH. Here, on the basis that a specific HARQ-ACK codebook scheme is indicated to the user equipment, the HARQ-ACK information may be determined on the basis of the number of specific HARQ processes for the plurality of BWPs or the number of HARQ processes for a specific BWP from among the plurality of BWPs.

**FIG.10**

## Description

[Technical Field]

The present disclosure relates to a wireless communication system, and in more detail, relates to a method and an apparatus of transmitting and receiving uplink control information in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and apparatus for generating HARQ-ACK (acknowledgement) information when the maximum number of Hybrid Automatic Repeat and request (HARQ) processes is configured differently between bandwidth parts (BWP) in a serving cell.

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may comprise: receiving configuration information on a serving cell for configuring a plurality of bandwidth parts (BWPs) in which different numbers of hybrid automatic repeat request (HARQ) processes are set; receiving at least one physical downlink shared channel (PDSCH) in the serving cell; and transmitting HARQ-ACK information for the at least one PDSCH. Herein, based on a specific HARQ-ACK codebook scheme being indicated to the UE, the HARQ-ACK information may be determined based on a specific number of HARQ processes for the plurality of BWPs or a number of HARQ processes for a specific BWP among the plurality of BWPs.

A method performed by a base station in a wireless communication system accordig to an additional aspect of the present disclosure may comprise: transmitting configuration information on a serving cell for configuring a plurality of bandwidth parts (BWPs) in which different numbers of hybrid automatic repeat request (HARQ) processes are set; transmitting at least one physical downlink shared channel (PDSCH) in the serving cell; and receiving HARQ-ACK information for the at least one PDSCH. Herein, based on a specific HARQ-ACK codebook scheme being indicated to a user equipment, the HARQ-ACK information may be determined based on a specific number of HARQ processes for the plurality of BWPs or a number of HARQ processes for a specific BWP among the plurality of BWPs.

[Technical Effects]

According to an embodiment of the present disclosure, a method and apparatus for generating HARQ-ACK information when the maximum number of HARQ processes is configured differently between BWPs in a serving cell may be provided.

According to an embodiment of the present disclosure, ambiguity problems with HARQ-ACK codebook construction and HARQ process index indication that can occur when the maximum number of HARQ processes are configured differently between BWPs in a serving cell can be solved.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a HARQ-ACK process for downlink data in a wireless communication system to which the present disclosure may be applied.
FIG. 8 illustrates a processing process and structure of a TB in a wireless communication system to which the present disclosure may be applied.
FIG. 9 illustrates a CBG-based HARQ process in a wireless communication system to which the present disclosure may be applied.
FIG. 10 is a diagram illustrating a signaling procedure between a base station and a UE for a method of transmitting and receiving control information according to an embodiment of the present disclosure.
FIG. 11 is a diagram illustrating the operation of a UE for a method of transmitting and receiving control information according to an embodiment of the present disclosure.
FIG. 12 is a diagram illustrating the operation of a base station for a method of transmitting and receiving control information according to an embodiment of the present disclosure.
FIG. 13 is a diagram which illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.
In some cases, known structures and devices may be omitted or may be shown in a form of a block diagram based on a core function of each structure and device in order to prevent a concept of the present disclosure from being ambiguous.
In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.
In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.
A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.
The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality

MAC: medium access control

NZP: non-zero power

OFDM: orthogonal frequency division multiplexing

PDCCH: physical downlink control channel

PDSCH: physical downlink shared channel

PMI: precoding matrix indicator

RE: resource element

RI: Rank indicator

RRC: radio resource control

RSSI: received signal strength indicator

Rx: Reception

QCL: quasi co-location

SINR: signal to interference and noise ratio

SSB (or SS/PBCH block): Synchronization signal block (including PSS (primary synchronization signal), SSS (secondary synchronization signal) and PBCH (physical broadcast channel))

TDM: time division multiplexing

TRP: transmission and reception point

TRS: tracking reference signal

Tx: transmission

UE: user equipment

ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

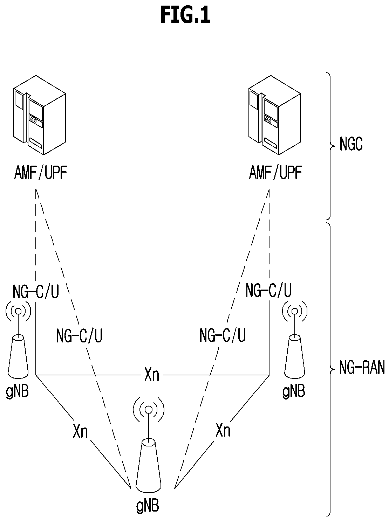

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

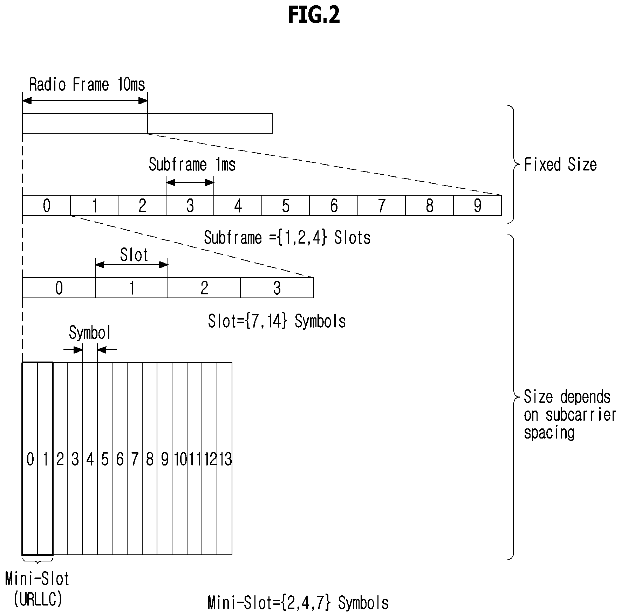

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | $\Delta f = 2^\mu \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10ms$. Here, a radio frame is configured with 10 subframes having a duration of $T_{sf} = (\Delta f_{max} N_f/1000) \cdot T_c = 1ms$, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration μ, slots are numbered in an increasing order of $n_s^\mu \in \{0,..., N_{slot}^{subframe,\mu} - 1\}$ in a subframe and are numbered in an increasing order of $n_{s,f}^\mu \in \{0,..., N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu=2$ (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

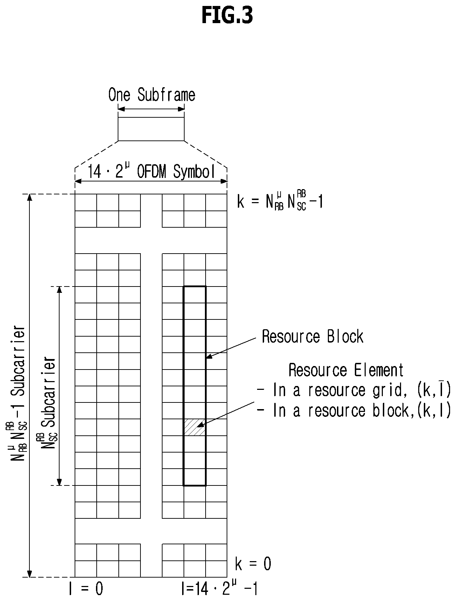

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \le N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

$$【Equation\ 1】$$

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

$$【Equation\ 2】$$

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

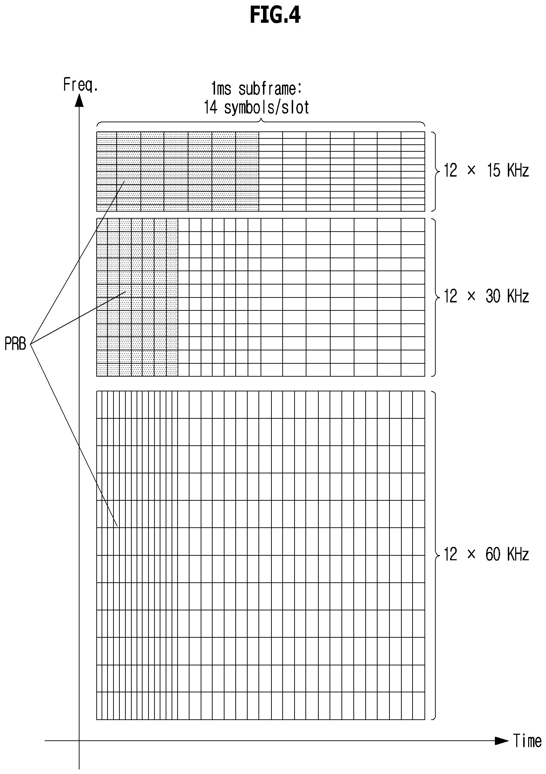

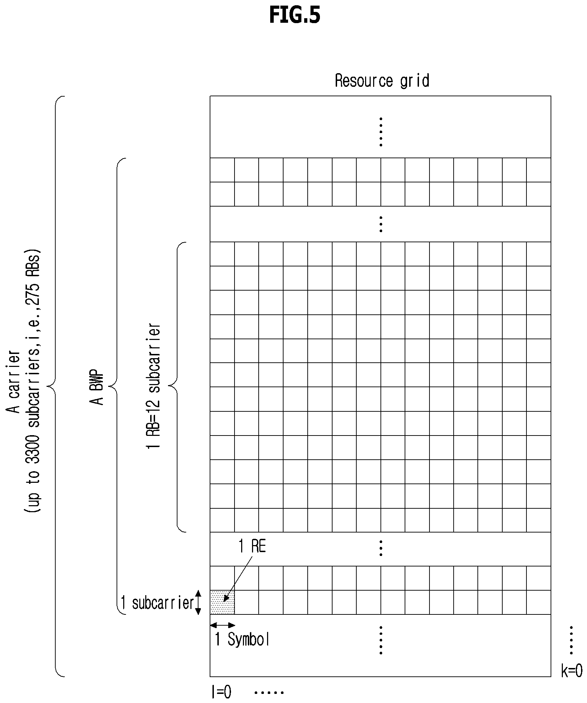

FIG. 4 illustrates a physical resource block in a wireless communication system to which the present disclosure may be applied. And, FIG. 5 illustrates a slot structure in a wireless communication system to which the present disclosure may be applied.

**EP 4 462 707 A1**

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

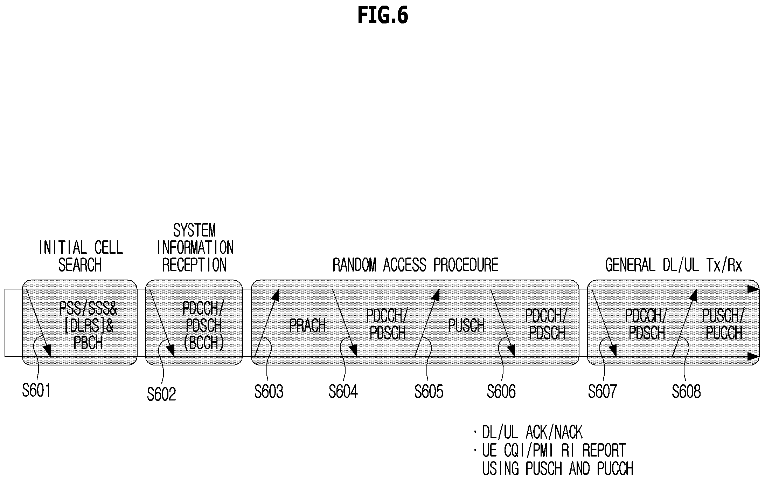

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE

8

system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Data transmission and HARQ (Hybrid Automatic Repeat and reQuest)-ACK (Acknowledgment) process

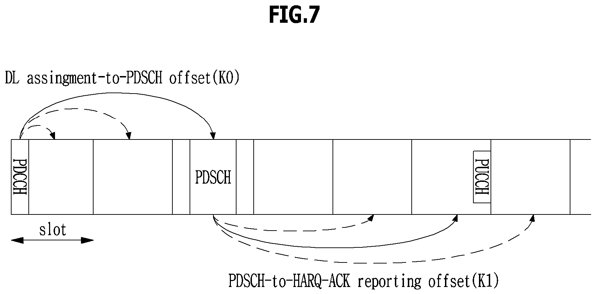

FIG. 7 illustrates a HARQ-ACK process for downlink data in a wireless communication system to which the present disclosure may be applied.

Referring to FIG. 7, a UE may detect a PDCCH in slot #n. Here, a PDCCH includes downlink scheduling information (e.g., DCI formats 1_0 and 1_1), and the PDCCH indicates a DL assignment-to-PDSCH offset (K0) and a PDSCH-HARQ-ACK reporting offset (K1). For example, DCI formats 1_0 and 1_1 may include the following information.

- Frequency domain resource assignment: indicates a RB resource (e.g., one or more (dis-) continuous RBs) allocated to a PDSCH.
- Time domain resource assignment: K0, indicates a starting position (e.g., OFDM symbol index) and a length (e.g.,

number of OFDM symbols) of a PDSCH in a slot
- PDSCH-to-HARQ_feedback timing indicator: indicates K1.
- HARQ process number (4 bits): indicates a HARQ process ID (Identity) for data (e.g., PDSCH, TB).
- PUCCH resource indicator (PRI: PUCCH resource indicator): indicates a PUCCH resource to be used for UCI transmission among a plurality of PUCCH resources in a PUCCH resource set.

Thereafter, a UE may receive a PDSCH in a slot #(n+K0) according to scheduling information of slot #n, and then transmit UCI through PUCCH in a slot #(n+K1). Here, UCI includes a HARQ-ACK response for a PDSCH. If a PDSCH is configured to transmit up to 1 TB, a HARQ-ACK response may be configured with 1-bit. When a PDSCH is configured to transmit up to 2 TBs, a HARQ-ACK response may be configured with 2-bits when spatial bundling is not configured, and may be configured with 1-bits when spatial bundling is configured. When the HARQ-ACK transmission time for a plurality of PDSCHs is designated as a slot #(n+K1), UCI transmitted in a slot #(n+K1) includes HARQ-ACK responses for the plurality of PDSCHs.

CBG (Code Block Group)-based HARQ process

In LTE, a Transport Block (TB)-based HARQ process is supported. In NR, a CBG-based HARQ process is supported along with the TB-based HARQ process.

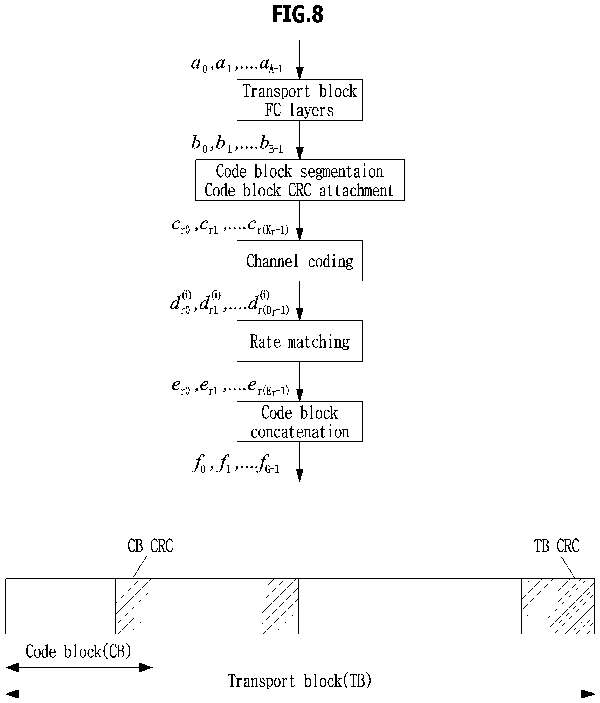

FIG. 8 illustrates a processing process and structure of a TB in a wireless communication system to which the present disclosure may be applied.
The procedure of FIG. 8 may be applied to data of a DL-Shared Channel (DL-SCH), a Paging Channel (PCH) and a Multicast Channel (MCH) transport channel. UL TB (or data of UL transport channel) may be similarly processed.
Referring to FIG. 8, a transmitter attaches a CRC (e.g., 24-bits) (TB CRC) to a TB for error checking. Thereafter, a transmitter may divide TB+CRC into a plurality of code blocks in consideration of a size of a channel encoder. As an example, the maximum size of a codeblock (CB) in LTE is 6144-bit. Accordingly, if a TB size is smaller than 6144-bit, a CB is not configured, and if a TB size is larger than 6144-bit, a TB is divided into 6144-bit size units to generate a plurality of CBs. A CRC (e.g., 24-bits) (CB CRC) is individually attached to each CB for error checking. After each CB is channel-coded and rate-matched, a codeword (CW) is generated by combining them into one. Data scheduling and a HARQ process according thereto are performed in units of TB, and CB CRC is used to determine early termination of TB decoding.

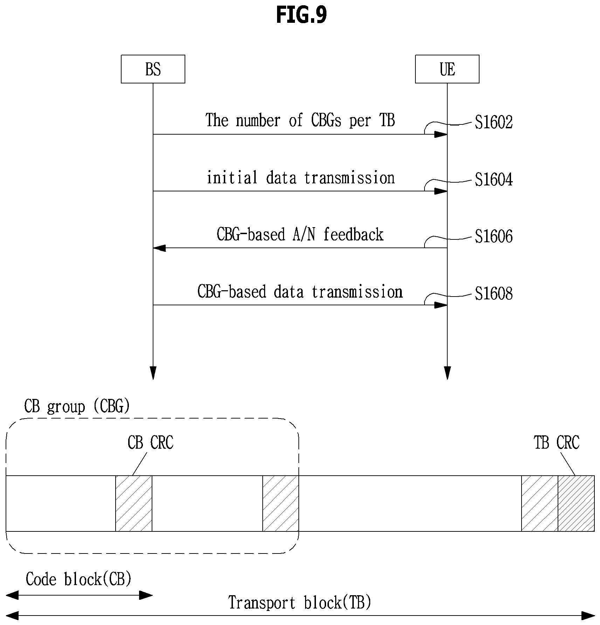

FIG. 9 illustrates a CBG-based HARQ process in a wireless communication system to which the present disclosure may be applied.
In a CBG-based HARQ process, data scheduling and a corresponding HARQ process may be performed in units of CBG.
Referring to FIG. 9, a UE may receive information on the maximum number M of codeblock groups (CBG) per transport block from a base station through a higher layer signal (e.g., RRC signal) (S1602). Thereafter, a UE may receive an initial data transmission (through PDSCH) from a base station (S1604). Here, data includes a TB, a transport block includes a plurality of CBs, and a plurality of CBs may be classified into one or more CBGs. Here, some of CBGs may include ceiling (K/M) number of CBs, and the remaining CBGs may include flooring (K/M) number of CBs. K represents the number of CBs in data. Thereafter, a UE may feed back CBG-based A/N information for data to a base station (S1606), and a base station may perform data retransmission based on a CBG (S1608). A/N information may be transmitted through PUCCH or PUSCH. Here, A/N information may include a plurality of A/N bits for data, and each A/N bit may indicate each A/N response generated in units of CBG for data. A payload size of A/N information may be maintained the same based on M regardless of CBG included in data.

Dynamic / semi-static HARQ-ACK codebook scheme

NR supports a dynamic HARQ-ACK codebook scheme and a semi-static HARQ-ACK codebook scheme. A HARQ-ACK (or A/N) codebook may be substituted with a HARQ-ACK payload.
When a dynamic HARQ-ACK codebook scheme is configured, a size of an A/N payload varies according to the actual number of scheduled DL data. To this end, a PDCCH related to DL scheduling includes a counter-downlink assignment index (counter-DAI) and a total-DAI. A counter-DAI indicates a {CC, slot} scheduling order value calculated in a CC (Component Carrier) (or cell)-first method, and is used to designate a position of an A/N bit in an A/N codebook. A total-DAI indicates a slot-unit scheduling accumulative value up to a current slot, and is used to determine a size of an A/N codebook.
When a semi-static A/N codebook scheme is configured, a size of an A/N codebook is fixed (to a maximum value) regardless of the actual number of scheduled DL data. Specifically, an (maximum) A/N payload (size) transmitted through one PUCCH in one slot may be determined by the number of corresponding A/N bits corresponding to a combination of all CCs configured for a UE and all DL scheduling slots (or PDSCH transmission slots or PDCCH monitoring slots) to which the A/N transmission timing can be indicated (hereinafter, bundling window). For example, DL grant DCI (PDCCH) includes PDSCH-to-A/N timing information, and the PDSCH-to-A/N timing information may have one (e.g., k) of a plurality of values. For example, when a PDSCH is received in slot #m, and PDSCH-to-A/N timing information in the DL grant DCI (PDCCH) scheduling the PDSCH indicates k, the A/N information for the PDSCH may be transmitted in slot #(m+k). As an example, $k \in \{1, 2, 3, 4, 5, 6, 7, 8\}$ may be given. Meanwhile, when A/N information is transmitted in slot #n, the A/N information may include a maximum possible A/N based on a bundling window. That is, A/N information of slot #n may include an A/N corresponding to slot #(n-k). For example, if $k \in \{1, 2, 3, 4, 5, 6, 7, 8\}$, A/N information of slot #n includes A/Ns (i.e., the maximum number of A/Ns) corresponding to from slot #(n-8) to slot #(n-1) regardless of actual DL data reception. Here, A/N information may be substituted with an A/N codebook and an A/N payload. In addition, a slot may be understood as/substituted with a candidate occasion for DL data reception. As an example, a bundling window may be determined based on PDSCH-to-A/N timing based on an A/N slot, and a PDSCH-to-A/N timing set may has a pre-defined value (e.g., {1, 2, 3, 4, 5, 6, 7, 8}) or may be configured by higher layer (RRC) signaling.

A dynamic/semi-static HARQ-ACK codebook configuration defined in the NR standard is as follows. When a UE is configured with a PDSCH HARQ-ACK codebook (pdsch-HARQ-ACK-Codebook) parameter set to semi-static, the UE determines a Type-1 HARQ-ACK codebook report (i.e., a semi-static HARQ-ACK codebook). On the other hand, when a UE is configured with a PDSCH HARQ-ACK codebook (pdsch-HARQ-ACK-Codebook) (or pdsch-HARQ-ACK-Codebook-r16) parameter set to dynamic, the UE determines a Type-2 HARQ-ACK codebook report (i.e., a dynamic HARQ-ACK codebook).

## HARQ-ACK codebook configuration method based on a maximum number of HARQ processes for a plurality of BWPs

- PUSCH: Physical Uplink Shared Channel
- RRM: Radio resource management
- SCS: Sub-carrier spacing
- RLM: Radio link monitoring
- DCI: Downlink Control Information
- CAP: Channel Access Procedure
- Ucell: Unlicensed cell
- TBS: Transport Block Size
- TDRA: Time Domain Resource Allocation
- SLIV: Start and Length Indicator Value. (It is an indication value for a start symbol index and the number of symbols in a slot of a PDSCH and/or PUSCH. It may be configured as a component of an entry in a TDRA field in a PDCCH for scheduling a corresponding PDSCH and/or PUSCH.)
- BWP: Bandwidth Part (BandWidth Part) (It may be configured with continuous resource blocks (RB) on a frequency axis. One numerology (e.g., SCS, CP length, slot/mini-slot duration, etc.). In addition, a plurality of BWPs may be configured in one carrier (the number of BWPs per carrier may also be limited), however the number of activated BWPs may be limited to a part (e.g., one) per carrier.)
- CORESET: Control resource set (It means a time frequency resource region in which a PDCCH can be transmitted, the number of CORESETs per BWP may be limited.)
- REG: Resource element group
- SFI: Slot Format Indicator (It is an indicator indicating a symbol level DL/UL direction in a specific slot(s), it is transmitted through a group common PDCCH.)
- COT: Channel occupancy time
- SPS: Semi-persistent scheduling
- QCL: Quasi-Co-Location (A QCL relationship between two reference signals (RS) may mean that QCL parameters such as Doppler shift, Doppler spread, average delay, average spread, and spatial reception parameter, etc. obtained from one RS can be applied to other RSs (or antenna port(s) of a corresponding RS). In the NR system, 4 QCL types are defined as follows. 'typeA': {Doppler shift, Doppler spread, average delay, delay spread}, 'typeB': {Doppler shift, Doppler spread}, 'typeC': {Doppler shift, average delay}, 'typeD': {Spatial Rx parameter}. For a certain DL RS antenna port(s), a first DL RS is configured as a reference for QCL type X (X=A, B, C, or D), and in addition, a second DL RS may be configured as a reference for QCL type Y (Y= A, B, C, or D, but X≠Y).)
- TCI: Transmission Configuration Indication (One TCI state includes a QCL relationship between one or a plurality of DL RSs and DM-RS ports of a PDSCH, DM-RS ports of a PDCCH, or CSI-RS port(s) of a CSI-RS resource. For 'Transmission Configuration Indication' among fields in DCI for scheduling a PDSCH, a TCI state index corresponding to each code point in the field is activated by a MAC control element (CE), and a TCI state configuration for each TCI state index is configured through RRC signaling. In the Rel-16 NR system, a corresponding TCI state is configured between DL RSs, but configuration between DL RS and UL RS or between UL RS and UL RS may be allowed in a future release. As an example of a UL RS, there are an SRS, a PUSCH DM-RS, and a PUCCH DM-RS, etc.)

- SRI: SRS resource indicator (It indicates one of SRS resource index values configured in 'SRS resource indicator' among fields in DCI for scheduling a PUSCH. When a UE transmits a PUSCH, the UE may transmit the PUSCH by using the same spatial domain transmission filter used for transmitting and receiving a reference signal associated with a corresponding SRS resource. Here, a reference RS is configured by RRC signaling through an SRS spatial relation information (SRS-SpatialRelationInfo) parameter for each SRS resource, and an SS/PBCH block, a CSI-RS, or an SRS may be configured as a reference RS.)

- TRP: Transmission and Reception Point

In the NR system, a millimeter wave (mmWave) band (e.g., above 125 or 24 GHz to 52.6 GHz) is defined as a frequency range 2 (FR2). The sub-carrier spacing (SCS) of an SS/PBCH block in the corresponding band may be either 120 or 240 kHz, and the SCS for other signals/channels (e.g., PDCCH, PDSCH, PUSCH, etc.) may be either 60 or 120 kHz.

In a high frequency NR system (e.g., above 52.6 GHz to 71 GHz, referred to as FR3 (or FR2-2) for convenience of description) larger SCSs may be introduced. If scalability of an OFDM symbol duration and a CP length defined in the current NR system is maintained, an OFDM symbol duration and a CP length for each SCS may be defined with lengths as shown in Table 6 below.

[Table 6]

| SCS [kHz] | 120 | 240 | 480 | 960 |
|---|---|---|---|---|
| Symbol duration | 8.33 $\mu$s | 4.17 $\mu$s | 2.08 $\mu$s | 1.04 $\mu$s |
| CP length | 586 ns | 293 ns | 146 ns | 73 ns |

Considering the complexity of the UE, in the case of a processing timeline defined in a new SCS such as 480/960 kHz, absolute time at processing times defined in existing SCS (e.g., 120 kHz) may be maintained. For example, the processing time may be the time required from PDSCH reception to HARQ-ACK generation, the time required from UL grant reception to PUSCH transmission, etc.

For example, if the minimum time required from PDSCH reception to HARQ-ACK generation in 120 kHZ SCS is defined as N1 symbol, the minimum time required from PDSCH reception to HARQ-ACK generation may be defined as 4*N1 symbols in 480 kHZ SCS.

In this way, when the time interval (e.g., number of symbols, number of slots) corresponding to the processing time of the UE (or base station) increases for SCS at high frequencies (e.g., SCS at 480/960 kHz), it may be difficult to continuously transmit and receive DL/UL data only with the existing number of HARQ processes (e.g., 16 HARQ processes).

The above-mentioned problem may be referred to as HARQ starvation, a method of permitting a larger number of HARQ processes (e.g., 32 HARQ processes) for SCS at high frequencies (e.g., SCS at 480/960 kHz) may be considered as a way to solve this problem.

In the present disclosure, for convenience of explanation, the proposed methods are explained by taking an example where the number of existing HARQ processes is 16 and the number of newly allowed HARQ processes is 32. Of course, the proposed methods described in the present disclosure below may be expanded and applied to wireless communication systems in which different maximum numbers of HARQ processes are supported.

By supporting 32 HARQ processes, additional complexity issues may arise, such as UE processing capability and/or buffer management. Therefore, based on UE capability signaling, the UE may be configured/defined to report information on the maximum number of HARQ processes that can be supported (e.g., whether it can support up to 32 HARQ processes).

The method proposed in the present disclosure below may be related to problems that may arise from supporting up to 32 HARQ processes in a wireless communication system, unlike before, in high frequency bands (e.g., FR2-2 band, or higher frequency bands).

Regarding downlink, through a higher layer configuration (e.g., PDSCH-ServingCellConfig in TS 38.331), the number of HARQ processes for PDSCH (e.g., nrofHARQ-ProcessesForPDSCH in TS 38.331) may be configured for each serving cell. As an example, the candidate set of HARQ process numbers for PDSCH may be {2, 4, 6, 10, 12, 16, 32}.

On the other hand, with respect to uplink, the number of HARQ processes for PUSCH is fixed to 16 (without configuration by higher layer parameters) in the existing case. In contrast, in the case of a wireless communication system in which a UE supporting 32 HARQ processes may exist, the number of HARQ processes for PUSCH may be configured by higher layer parameters and may be configured to at least 16 or 32.

Specifically, methods for solving problems that may occur when the maximum number of HARQ processes that may operate in the first BWP and the second BWP are different, when a first BWP and a second BWP are set within a serving cell, are proposed in the present disclosure.

For example, for a UE capable of supporting 32 HARQ processes at 480 kHz SCS and/or 960 kHz SCS, a first BWP configured with 120 kHz SCS and a second BWP configured with 480 (or 960) kHz SCS may be configured/exist within the FR2-2 serving cell. At this time, the UE may operate using 16 or fewer HARQ processes in the first BWP. On the other hand, the UE may operate using 32 or a specific number of HARQ processes in the second BWP. Here, the specific number may be a number exceeding 16 or a number exceeding the maximum number of HARQ processes that may operate in the first BWP.

In the present disclosure, through the following embodiments, when the maximum number of HARQ processes is different between BWPs set in a serving cell, the (enhanced) type-3 HARQ-ACK codebook determination method and DCI design method considering BWP switching are explained.

In the present disclosure, determining the HARQ-ACK codebook may mean generating/constructing the HARQ-ACK codebook.

Embodiment 1

This embodiment relates to a method for determining the (improved) type-3 HARQ-ACK codebook in a case that a first BWP and a second BWP are set in a serving cell and the maximum number of HARQ processes that can operate in the first BWP and the second BWP are different.

For example, with regard to the type-3 HARQ-ACK codebook, if the enhanced type-3 HARQ-ACK codebook is not configured (or pdsch-HARQ-ACK-enhType3List is not configured), the HARQ-ACK codebook may be determined based on the number of HARQ process indexes set for each serving cell for each serving cell.

However, if the first BWP and the second BWP are configured in a specific serving cell and the maximum number of HARQ processes that may operate in the first BWP and the second BWP are different, the method for determining the type-3 HARQ-ACK codebook may be ambiguous.

In this embodiment, to resolve the above-mentioned ambiguity, a method for determining a codebook based on the maximum (or minimum) number of HARQ processes among BWPs in the serving cell (hereinafter, Embodiment 1-1) and a method for determining a codebook (hereinafter, Embodiment 1-2) based on the maximum number of HARQ processes operating in a specific BWP (or configured for a specific BWP) within the corresponding serving cell will be described.

(Embodiment 1-1)

When a different maximum number of HARQ processes is considered between BWPs configured in the serving cell, the UE may determine the HARQ-ACK codebook based on the maximum (or minimum) number of HARQ processes among the corresponding BWPs.

For example, the first BWP in a serving cell may be configured with 120 kHz SCS and operate using 16 HARQ processes (i.e., the number of HARQ processes is set to 16). On the other hand, the second BWP in the corresponding serving cell is configured with 480 (or 960) kHz SCS and may operate using 32 HARQ processes (i.e., the number of HARQ processes is set to 32).

At this time, when determining the type-3 HARQ-ACK codebook for the PUCCH cell group including the serving cell, a type-3 HARQ-ACK codebook may be determined based on 32 HARQ process indexes for 32 HARQ processes, for the corresponding serving cell. In this case, whether there is an active BWP may not be considered.

That is, when the UE is configured/indicated to determine the type-3 HARQ-ACK codebook based on the higher layer configuration and/or lower layer indication for the PUCCH cell group including the corresponding cell, the UE may determine the type-3 HARQ-ACK codebook according to the number of HARQ process indexes according to the maximum number of HARQ processes among the BWPs in the cell. Alternatively, the UE may determine the type-3 HARQ-ACK codebook according to the number of HARQ process indexes according to the minimum number of HARQ processes among BWPs in the cell.

At this time, HARQ-ACK information corresponding to 32 HARQ process indexes may mean (recent) ACK/NACK information corresponding to each HARQ process index. As an example, when the UE receives a PDSCH corresponding to HARQ process index 20 in the second BWP and determines the type-3 HARQ-ACK codebook after switching to the first BWP (i.e., BWP switching), HARQ-ACK information corresponding to HARQ process index 20 may be ACK/NACK information for the reception result of the PDSCH corresponding to HARQ process index 20 received from the second BWP.

Alternatively, a rule may be defined so that the UE feeds back NACK information for indices other than the HARQ process index operating (or configured) in the active BWP. As an example, when the UE receives a PDSCH corresponding to HARQ process index 20 in the second BWP and determines the type-3 HARQ-ACK codebook after switching to the first BWP (i.e., BWP switching), NACK information may be mapped to all indices from the 17th HARQ process index to the 32nd HARQ process index. In this case, whether the UE has (actually) received the PDSCH corresponding to HARQ process index 20 in the second BWP may not be considered.

(Embodiment 1-2)

When a different maximum number of HARQ processes is considered between BWPs configured in the serving cell, the HARQ-ACK codebook may be determined based on the maximum number of HARQ processes operating in a specific BWP (or configured for a specific BWP) within the serving cell.

If the serving cell is activated, the type-3 HARQ-ACK codebook for the corresponding serving cell may be determined only by the number of HARQ process indexes operating (or configured) in the actual active BWP.

For example, the first BWP in a serving cell may be configured with 120 kHz SCS and operate using 16 HARQ processes (i.e., the number of HARQ processes is set to 16). On the other hand, the second BWP in the corresponding serving cell is configured with 480 (or 960) kHz SCS and may operate using 32 HARQ processes (i.e., the number of HARQ processes is set to 32).

If the first BWP is an active BWP, the type-3 HARQ-ACK codebook for the serving cell may be determined by considering only HARQ-ACK information corresponding to the number of 16 HARQ processes. That is, the type-3 HARQ-ACK codebook may be determined only with ACK/NACK information corresponding to 16 HARQ process indexes.

On the other hand, if the second BWP is an active BWP, the type-3 HARQ-ACK codebook for the serving cell may be determined by considering only HARQ-ACK information corresponding to the number of 32 HARQ processes. That is, the type-3 HARQ-ACK codebook may be determined only with ACK/NACK information corresponding to 32 HARQ process indexes.

For another example, if the serving cell is activated (and/or deactivated), the specific BWP may be configured/indicated through higher layer signaling (e.g., RRC signaling, MAC-CE, etc.). That is, the UE may receive information on how to determine the type-3 HARQ-ACK codebook for the serving cell based on the maximum number of HARQ process indexes configured for which BWP index through higher layer signaling.

If the first BWP is configured/indicated through corresponding higher layer signaling, the type-3 HARQ-ACK codebook for the serving cell may be determined by considering only the HARQ-ACK information corresponding to the number of 16 HARQ processes. Alternatively, if a second BWP is configured/indicated through corresponding higher layer signaling, the type-3 HARQ-ACK codebook for the serving cell may be determined by considering only the HARQ-ACK information corresponding to the number of 32 HARQ processes.

At this time, for an index other than the HARQ process index operating (or configured) in the active BWP as above, the UE may be configured/defined to feed back (recent) ACK/NACK information corresponding to each HARQ process index. Alternatively, for an index other than the HARQ process index operating (or configured) in the active BWP as above, a rule may be defined so that the UE feeds back NACK information.

Alternatively, if the serving cell is in a deactivated or dormant state, the type-3 HARQ-ACK codebook for the serving cell may be determined only by the number of HARQ process indexes operating (or configured) in a specific BWP. As an example, a specific BWP may be the first active BWP (e.g., firstActiveDownlinkBWP-Id), a default BWP (e.g., defaultDownlinkBWP-Id), or an initial BWP (e.g., initialDownlinkBWP).

For example, the first BWP in a serving cell may be configured with 120 kHz SCS and operate using 16 HARQ processes (i.e., the number of HARQ processes is set to 16). On the other hand, the second BWP in the corresponding serving cell is configured with 480 (or 960) kHz SCS and may operate using 32 HARQ processes (i.e., the number of HARQ processes is set to 32). At this time, the first BWP may be set as the first active BWP (e.g., firstActiveDownlinkBWP-Id).

If the serving cell is in a deactivated or dormant state, the type-3 HARQ-ACK codebook for the serving cell may be determined by considering only the HARQ-ACK information corresponding to the number of 16 HARQ processes. That is, the type-3 HARQ-ACK codebook may be determined only with ACK/NACK information corresponding to 16 HARQ process indexes. This may be based on the first BWP configured as the first active BWP.

Alternatively, if the serving cell is in a deactivated or dormant state, the type-3 HARQ-ACK codebook may be determined based on the maximum (or minimum) number of HARQ processes among the number of HARQ processes operating (or configured) in all BWPs in the serving cell.

Additionally, in the case of an improved type-3 HARQ-ACK codebook applicable to an improved wireless communication system, the UE may be configured to feed back only specific HARQ process index(es) for each serving cell.

If multiple entries are configured for the list of enhanced type-3 HARQ-ACK codebooks (e.g., pdsch-HARQ-ACK-enhType3List), the base station may indicate the UE to select a specific entry among the multiple entries through DCI. The UE may determine the type3-HARQ-ACK codebook using only the serving cell(s) corresponding to a specific entry and the HARQ process indexes configured within the serving cell.

For example, the DCI format in which the UE receives pdsch-HARQ-ACK-EnhType3List, schedules PDSCH reception, and triggers Type-3 HARQ-ACK codebook may include an enhanced Type 3 codebook indicator field that provides a value for pdsch-HARQ-ACK-EnhType3Index. In this case, the UE may determine the size of the set of indicated serving cells (e.g., $N_{cells}^{DL,ind}$) and the size of the set of indicated numbers of HARQ processes (e.g., $N_{HARQ,c}^{DL,ind}$) for each indicated serving cell and each indicated number of HARQ processes, from the entry in pdsch-HARQ-ACK-EnhType3List corresponding to the value for the pdsch-HARQ-ACK-EnhType3Index. If the DCI format does not include an enhanced Type 3 codebook indicator field, the value for pdsch-HARQ-ACK-EnhType3Index is 0.

Additionally or alternatively, the DCI format in which the UE receives pdsch-HARQ-ACK-EnhType3List, schedules PDSCH reception, and triggers Type-3 HARQ-ACK codebook may include an enhanced Type 3 codebook indicator field that provides a value for pdsch-HARQ-ACK-EnhType3Index. In this case, the UE may determine the number of indicated serving cells (e.g., $N_{cells}^{DL,ind}$) and the number of indicated HARQ processes (e.g., $N_{HARQ,c}^{DL,ind}$) for each indicated serving cell (c), from the entry in pdsch-HARQ-ACK-EnhType3List corresponding to the value for the pdsch-HARQ-ACK-EnhType3Index. If the DCI format does not include an enhanced Type 3 codebook indicator field, the value for pdsch-HARQ-ACK-EnhType3Index may be provided by the value of the MCS field of the corresponding DCI format.

As an example, the first BWP in a serving cell may be configured with 120 kHz SCS and operate using 16 HARQ processes (i.e., the number of HARQ processes is set to 16). On the other hand, the second BWP in the corresponding serving cell is configured with 480 (or 960) kHz SCS and may operate using 32 HARQ processes (i.e., the number of HARQ processes is set to 32).

At this time, a method of configuring the type-3 HARQ-ACK codebook to be determined only for some HARQ process indexes of the serving cell by configuring a specific index (e.g., pdsch-HARQ-ACK-EnhType3Index) may be considered.

For example, the UE may be configured/defined to determine type-3 HARQ-ACK codebook for any/some HARQ process index(s), based on the maximum number of 32 HARQ process indexes operating (or configured) in all BWPs in the serving cell.

As a specific example of this example, regarding the method of mapping HARQ-ACK information corresponding to 32 HARQ process indexes, as in the above-described embodiment 1-1, a method of determining the HARQ-ACK codebook through (recent) ACK/NACK information corresponding to each HARQ process index may be applied. Additionally or alternatively, a rule may be defined to feed back NACK information for indices other than the HARQ process index operating (or configured) in the active BWP.

For another example, the UE may be configured/defined to determine type-3 HARQ-ACK codebook for any/some HARQ process index(s), respectively for BWPs with different numbers of HARQ processes within the serving cell (e.g., BWP(s) with 32 HARQ process indexes set and BWP(s) with 16 HARQ process indexes set).

As a specific example of this example, the entry corresponding to the list of enhanced type-3 HARQ-ACK codebook indicated by DCI (e.g., pdsch-HARQ-ACK-enhType3List) may be different, depending on whether the active BWP is a primary BWP or a secondary BWP.

For the corresponding serving cell, HARQ process indexes 15 to 24 may be set as the $N^{th}$ entry of the list of enhanced type-3 HARQ-ACK codebooks (e.g., pdsch-HARQ-ACK-enhType3List) configured based on 32 HARQ-ACK process indexes. Additionally, for that serving cell, HARQ process indexes 6 to 10 may be set as the $N^{th}$ entry of the list of enhanced type-3 HARQ-ACK codebooks (e.g., pdsch-HARQ-ACK-enhType3List) configured based on 16 HARQ-ACK process indexes.

If the active BWP is the first BWP and the $N^{th}$ entry of the enhanced HARQ-ACK codebook is indicated through DCI, the UE may determine the type-3 HARQ-ACK codebook for the serving cell only using HARQ-ACK information corresponding to HARQ process indexes 6 to 10. Alternatively, if the active BWP is a second BWP and the $N^{th}$ entry of the enhanced HARQ-ACK codebook is indicated through DCI, the terminal may determine the type-3 HARQ-ACK codebook for the serving cell only using HARQ-ACK information corresponding to HARQ process indexes 15 to 24.

Additionally or alternatively, for serving cells in a deactivated or dormant state, the type-3 HARQ-ACK codebook for the corresponding serving cell may be determined, using only the number of HARQ process indexes operating (or configured) in a specific BWP (e.g., first active BWP, default BWP, initial BWP, BWP configured/indicated by specific signaling, etc.).

If the first BWP is configured/provided as the specific BWP (e.g., first active BWP, default BWP, initial BWP, BWP configured/indicated by specific signaling, etc.) and the corresponding serving cell is in a deactivated or dormant state, the $N^{th}$ entry of the list of type-3 HARQ-ACK codebook enhanced by DCI (e.g., pdsch-HARQ-ACK-enhType3List) may be indicated. In this case, the UE may determine the type-3 HARQ-ACK codebook for the corresponding serving cell only with HARQ-ACK information corresponding to HARQ process indexes 6 to 10.

Embodiment 2

This embodiment relates to a method of configuring a bit field indicating the HARQ process index of DCI in a case that a first BWP and a second BWP are configured in a serving cell and the maximum number of HARQ processes that may operate in the first BWP and the second BWP are different.

As an example, the DCI in this embodiment may correspond to a non-fallback DCI, such as DCI format 0_1/DCI format 0-2/DCI format 1_1/DCI format 1-2.

Additionally, in this embodiment as an example, the first BWP in the serving cell is configured with 120 kHz SCS and operates using 16 HARQ processes (i.e., the number of HARQ processes is set to 16). On the other hand, as an example, the second BWP in the serving cell is configured with 480 (or 960) kHz SCS and operates using 32 HARQ processes (i.e., the number of HARQ processes is set to 32).

First, a bit field may be constructed based on the maximum number of HARQ processes among BWPs in the corresponding serving cell.

For example, even if a non-fallback DCI is received from any BWP within the cell, the bit field indicating the HARQ process index may be constructed with 5 bits. If the first BWP is the active BWP, the UE may ignore the most significant bit (MSB) bit or least significant bit (LSB) bit of the corresponding bit field, or may expect the MSB bit or LSB bit to be indicated as 0.

Alternatively, the bit field may be constructed based on the maximum number of HARQ processes operating (or configured) in a specific BWP within the corresponding serving cell.

For example, depending on which BWP in the corresponding cell is activated, the size of the bit field (i.e., bit width) indicating the HARQ process index in the non-fallback DCI may be different. If the first BWP is an active BWP, the UE may assume that the corresponding bit field consists of 4 bits. On the other hand, if the second BWP is an active BWP, the UE may assume that the corresponding bit field is constructed with 5 bits.

In this regard, when the UE receives a DCI indicating BWP switching from the first BWP to the second BWP, the UE may interpret the HARQ process index for a total of 5 bits by prepending that '0' exists in the 4-bit MSB within the corresponding DCI. Conversely, when the UE receives a DCI indicating BWP switching from the second BWP to the first BWP, the UE may interpret the HARQ process index for a total of 4 bits by truncating the 5-bit MSB within the corresponding DCI.

Additionally or alternatively, in order not to consider the method in the embodiments described above in the present disclosure, the UE may not expect that the first BWP and the second BWP are configured in a certain serving cell, and that the maximum number of HARQ processes that may operate in the first BWP and the second BWP are configured differently.

For example, for a UE capable of supporting 32 HARQ processes at 480 kHz SCS and/or 960 kHz SCS, if the BWP of 120 kHz SCS is configured within the serving cell, configuring of more than 16 HARQ processes may not be permitted for any BWP within the cell. That is, even if a BWP of 480 kHz SCS or 960 kHz SCS is configured in the serving cell, the UE may not expect that more than 16 HARQ process indexes are operated/set for the BWP.

Alternatively, if 32 HARQ processes are set for the cell or a specific BWP within the cell, the BWP of 120 kHz SCS may not be allowed to be configured within the cell. Alternatively, in this case, the UE may not expect the BWP of 120 kHz SCS to be configured in the cell.

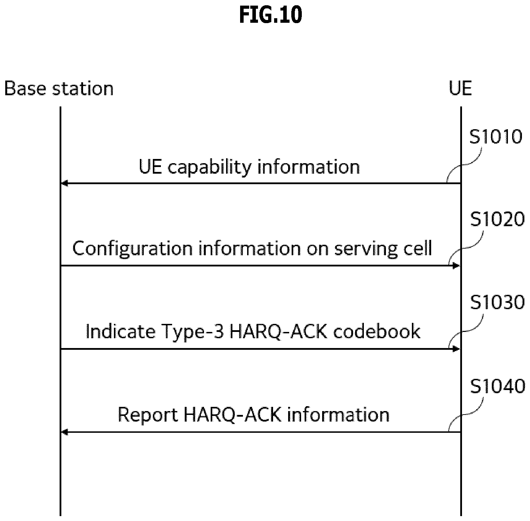

FIG. 10 is a diagram illustrating a signaling procedure between a base station and a UE for a method of transmitting and receiving control information according to an embodiment of the present disclosure.

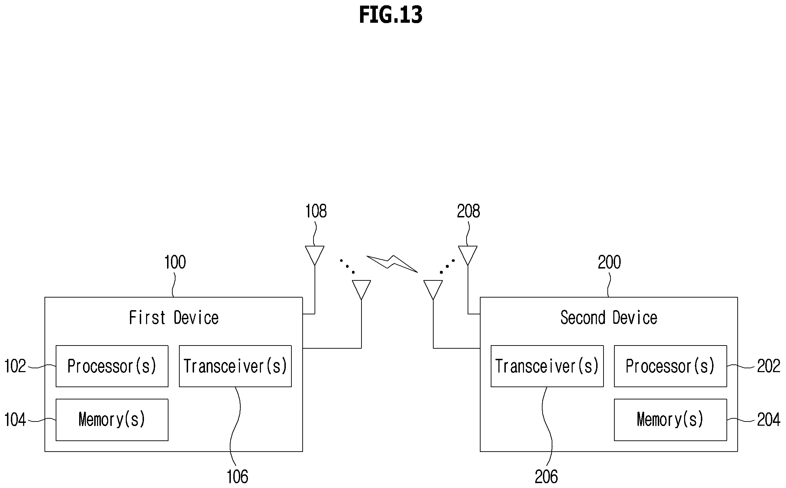

FIG. 10 illustrates a signaling procedure between a base station and a UE based on the previously proposed method (e.g., any one of Embodiments 1 and 2 and the detailed embodiments thereof, or a combination of more than one (detailed) embodiments). The example in FIG. 10 is for convenience of explanation and does not limit the scope of the present disclosure. Some step(s) illustrated in FIG. 10 may be omitted depending on the situation and/or setting. Additionally, the base station and the UE in FIG. 10 is only examples, and may be implemented as devices illustrated in FIG. 13 below. For example, the processors 102/202 of FIG. 13 may control transmission and reception of channels/-signals/data/information, etc. using the transceivers 106/206, and may control to store transmitted or received channels/signals/data/information, etc. in the memory 104/204.

Referring to FIG. 10, the UE may report information on UE capability to the base station (S1010).

For example, the UE may report information indicating that it may support 32 HARQ processes for 480 kHz SCS and/or 960 kHz SCS in an ultra-high frequency band (e.g., FR2-2 band) to the base station through UE capability signaling.

The base station may provide/transmit configuration information for the serving cell in the corresponding ultra-high frequency band (e.g., FR2-2 band) to the UE (S1020).

For example, when configuring a serving cell to a UE, the base station may configure BWPs in which a different maximum number of HARQ processes are operated (or configured) to the UE. As a specific example, the first BWP in the corresponding serving cell may be configured with 120 kHz SCS and operate using 16 HARQ processes (i.e., the number of HARQ processes is set to 16). On the other hand, the second BWP in the corresponding serving cell is configured with 480 (or 960) kHz SCS and may operate using 32 HARQ processes (i.e., the number of HARQ processes is set to 32).

The base station may configure/indicate the (enhanced) Type-3 HARQ-ACK codebook to the UE (S1030).

For example, the base station may configure/indicate the UE to construct/determine the (enhanced) Type-3 HARQ-ACK codebook for the PUCCH cell group including the serving cell configured in step S1020. In this case, higher layer signaling and/or MAC-CE/DCI, etc. may be used.

Based on the configuration and indication described above, the UE may construct/determine the (enhanced) Type-3 HARQ-ACK codebook and report HARQ-ACK information to the base station based on the (enhanced) Type-3 HARQ-ACK codebook (S1040).

For example, as in Embodiment 1-1, the UE may determine the HARQ-ACK codebook based on the maximum (or minimum) number of HARQ processes among BWPs in the serving cell. Alternatively, as in Embodiment 1-2, the UE may determine the HARQ-ACK codebook based on the maximum number of HARQ processes operating in a specific BWP (or configured for a specific BWP) within the serving cell.

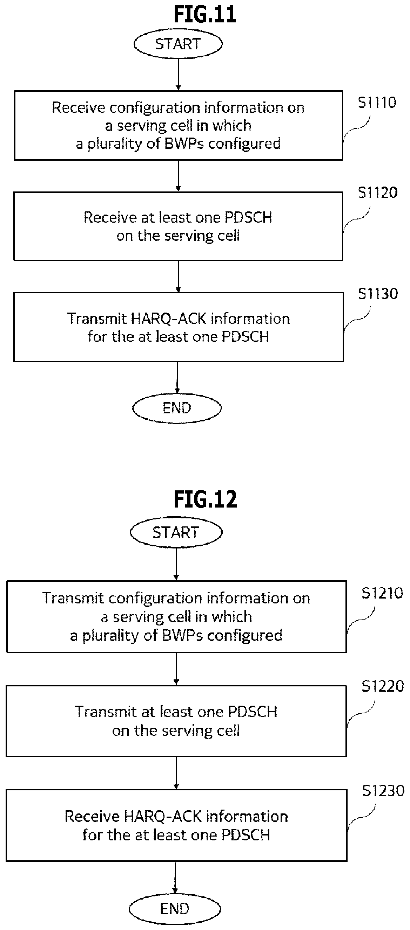

FIG. 11 is a diagram illustrating the operation of a UE for a method of transmitting and receiving control information according to an embodiment of the present disclosure.

FIG. 11 illustrates an operation of the UE based on the previously proposed method (e.g., any one of Embodiments 1 and 2 and the detailed embodiments thereof, or a combination of more than one (detailed) embodiments). The example in FIG. 11 is for convenience of explanation and does not limit the scope of the present disclosure. Some step(s) illustrated in FIG. 11 may be omitted depending on the situation and/or setting. Additionally, the UE in FIG. 11 is only examples, and may be implemented as devices illustrated in FIG. 13 below. For example, the processors 102/202 of FIG. 13 may control transmission and reception of channels/signals/data/information, etc. using the transceivers 106/206, and may control to store transmitted or received channels/signals/data/information, etc. in the memory 104/204.

Referring to FIG. 11, in step S1110, the UE may receive configuration information on a serving cell that configures a plurality of BWPs with different numbers of HARQ processes configured.

The corresponding configuration information may be received through higher layer signaling (e.g., RRC signaling). For example, the number of different HARQ processes may correspond to {2, 4, 6, 10, 12, 16, 32}, etc. described above in the present disclosure.

In step S1120, the UE may receive at least one PDSCH from the corresponding serving cell. That is, the UE may receive at least one PDSCH from the BWP (e.g., active BWP) configured in the corresponding serving cell.

Thereafter, in step S1130, the UE may determine HARQ-ACK information for the at least one PDSCH and transmit the determined HARQ-ACK information.

At this time, based on the terminal being indicated to use a specific HARQ-ACK codebook method (e.g., (enhanced) Type-3 HARQ-ACK codebook), the HARQ-ACK information may be determined based on the number of specific HARQ processes for the plurality of BWPs or the number of HARQ processes for a specific BWP among the plurality of BWPs.

The specific HARQ-ACK codebook method may be indicated by a DCI scheduling the at least one PDSCH.

The specific number of HARQ processes may be the maximum number of HARQ processes or the minimum number of HARQ processes among the numbers of HARQ processes configured for the plurality of BWPs. In this regard, when the HARQ-ACK information is determined based on the specific number of HARQ processes, the HARQ-ACK information may include ACK information or NACK information corresponding to HARQ process indexes according to the specific number of HARQ processes. Alternatively, when the HARQ-ACK information is determined based on the specific number of HARQ processes, the HARQ-ACK information may include NACK information corresponding to a HARQ process index excluding the HARQ process index for the active BWP among the HARQ process indexes according to the specific number of HARQ processes.

The specific BWP may be an active BWP among the plurality of BWPs configured in the serving cell (when the serving cell is activated). Alternatively, the specific BWP may be one of the first activated BWP, the initial BWP or the default BWP for the serving cell (if the serving cell is in a deactivated or dormant state). Alternatively, the specific BWP may be configured/indicated to the UE through higher layer signaling (e.g., RRC signaling, MAC-CE, etc.) in relation to determination of the HARQ-ACK codebook.

Additionally or alternatively, regarding the enhanced type-3 HARQ-ACK codebook method described above, the HARQ-ACK information may include ACK information or NACK information corresponding to one or more HARQ process indexes included in a specific entry. At this time, the candidate entry group for indicating the specific entry may be individually configured for a plurality of BWPs for which the different numbers of HARQ processes are set. Here, the specific entry may be indicated by a DCI scheduling the at least one PDSCH.

Additionally, with respect to determination of the HARQ-ACK information, the DCI scheduling the at least one PDSCH may include a field indicating a HARQ process number. At this time, the number of bits in the field may be determined/configured/defined based on the number of HARQ processes or the number of HARQ processes for the specific BWP.

Additionally, although not shown in FIG. 11, the UE may transmit capability information on the maximum number of HARQ processes supported by the UE. In this regard, different numbers of HARQ processes set in the plurality of BWPs may be set based on the maximum number of HARQ processes.

FIG. 12 is a diagram illustrating the operation of a base station for a method of transmitting and receiving control information according to an embodiment of the present disclosure.

FIG. 12 illustrates an operation of the base station based on the previously proposed method (e.g., any one of Embodiments 1 and 2 and the detailed embodiments thereof, or a combination of more than one (detailed) embodiments). The example in FIG. 12 is for convenience of explanation and does not limit the scope of the present disclosure. Some step(s) illustrated in FIG. 12 may be omitted depending on the situation and/or setting. Additionally, the base station in FIG. 12 is only examples, and may be implemented as devices illustrated in FIG. 13 below. For example, the processors 102/202 of FIG. 13 may control transmission and reception of channels/signals/data/information, etc. using the transceivers 106/206, and may control to store transmitted or received channels/signals/data/information, etc. in the memory 104/204.

Referring to FIG. 12, in step S1210, the base station may transmit configuration information on a serving cell that configures a plurality of BWPs with different numbers of HARQ processes configured.

The corresponding configuration information may be received through higher layer signaling (e.g., RRC signaling). For example, the number of different HARQ processes may correspond to {2, 4, 6, 10, 12, 16, 32}, etc. described above in the present disclosure.

In step S1220, the base station may transmit at least one PDSCH from the corresponding serving cell. That is, the base station may transmit at least one PDSCH on the BWP (e.g., active BWP) configured in the corresponding serving cell.

Thereafter, in step S1230, the base station may receive HARQ-ACK information for the at least one PDSCH.

At this time, based on the base station indicating the UE to use a specific HARQ-ACK codebook method (e.g., (enhanced) Type-3 HARQ-ACK codebook), the HARQ-ACK information may be determined based on the number of specific HARQ processes for the plurality of BWPs or the number of HARQ processes for a specific BWP among the plurality of BWPs.

The specific HARQ-ACK codebook method may be indicated by a DCI scheduling the at least one PDSCH.

The specific number of HARQ processes may be the maximum number of HARQ processes or the minimum number of HARQ processes among the numbers of HARQ processes configured for the plurality of BWPs. In this regard, when the HARQ-ACK information is determined based on the specific number of HARQ processes, the HARQ-ACK information may include ACK information or NACK information corresponding to HARQ process indexes according to the specific number of HARQ processes. Alternatively, when the HARQ-ACK information is determined based on the specific number of HARQ processes, the HARQ-ACK information may include NACK information corresponding to a HARQ process index excluding the HARQ process index for the active BWP among the HARQ process indexes according to the specific number of HARQ processes.

The specific BWP may be an active BWP among the plurality of BWPs configured in the serving cell (when the serving cell is activated). Alternatively, the specific BWP may be one of the first activated BWP, the initial BWP or the default BWP for the serving cell (if the serving cell is in a deactivated or dormant state). Alternatively, the specific BWP may be configured/indicated to the UE through higher layer signaling (e.g., RRC signaling, MAC-CE, etc.) in relation to determination of the HARQ-ACK codebook.

Additionally or alternatively, regarding the enhanced type-3 HARQ-ACK codebook method described above, the HARQ-ACK information may include ACK information or NACK information corresponding to one or more HARQ process indexes included in a specific entry. At this time, the candidate entry group for indicating the specific entry may be individually configured for a plurality of BWPs for which the different numbers of HARQ processes are set. Here, the specific entry may be indicated by a DCI scheduling the at least one PDSCH.

Additionally, with respect to determination of the HARQ-ACK information, the DCI scheduling the at least one PDSCH may include a field indicating a HARQ process number. At this time, the number of bits in the field may be determined/configured/defined based on the number of HARQ processes or the number of HARQ processes for the specific BWP.

Additionally, although not shown in FIG. 12, the base station may receive capability information on the maximum number of HARQ processes supported by the UE. In this regard, different numbers of HARQ processes set in the plurality of BWPs may be set based on the maximum number of HARQ processes.

According to embodiments of the present disclosure as described above, the ambiguity problem with the HARQ-ACK codebook construction and HARQ process index indication that can occur when the maximum number of HARQ processes (i.e., the number of operating/configured HARQ processes) is set differently between BWPs in the serving cell can be resolved.

General Device to which the Present Disclosure may be applied

FIG. 13 illustrates a block diagram of a wireless communication device according to an embodiment of the present disclosure.

In reference to FIG. 13, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system, the method comprising:

   receiving configuration information on a serving cell for configuring a plurality of bandwidth parts (BWPs) in which different numbers of hybrid automatic repeat request (HARQ) processes are set;
   receiving at least one physical downlink shared channel (PDSCH) in the serving cell; and
   transmitting HARQ-ACK information for the at least one PDSCH,
   wherein, based on a specific HARQ-ACK codebook scheme being indicated to the UE, the HARQ-ACK information is determined based on a specific number of HARQ processes for the plurality of BWPs or a number of HARQ processes for a specific BWP among the plurality of BWPs.

2. The method of claim 1,
   wherein the specific HARQ-ACK codebook scheme is indicated by downlink control information (DCI) for scheduling the at least one PDSCH.

3. The method of claim 1, further comprising:

   transmitting capability information on a maximum number of HARQ processes supported by the UE,
   wherein a number of different HARQ processes set in the plurality of BWPs is set based on the maximum number of HARQ processes.

4. The method of claim 1,
   wherein the specific number of HARQ processes is a maximum number of HARQ processes or a minimum number of HARQ processes among numbers of HARQ processes set for the plurality of BWPs.

5. The method of claim 1,
   wherein, based on the HARQ-ACK information being determined based on the specific number of HARQ processes, the HARQ-ACK information includes ACK information or negative ACK (NACK) information corresponding to HARQ process indexes according to the specific number of HARQ processes.

6. The method of claim 1,
   wherein, based on the HARQ-ACK information being determined based on the specific number of HARQ processes, the HARQ-ACK information includes NACK information corresponding to a HARQ process index excluding a HARQ process index for an active BWP among HARQ process indexes according to the specific number of HARQ processes.

7. The method of claim 1,
   wherein the specific BWP is an active BWP among the plurality of BWPs configured in the serving cell.

8. The method of claim 1,

wherein the specific BWP is one of a first activated BWP, an initial BWP, or a default BWP for the serving cell.

9. The method of claim 1,
wherein the specific BWP is configured or indiecated to the UE through higher layer signaling in relation to determination of the HARQ-ACK information.

10. The method of claim 1,

wherein the HARQ-ACK information includes ACK information or NACK information corresponding to one or more HARQ process indexes included in a specific entry, and
wherein a candidate entry group for indicating the specific entry is respectively configured for a plurality of BWPs for which the different numbers of HARQ processes are set.

11. The method of claim 10,
wherein the specific entry is indicated by a DCI scheduling the at least one PDSCH.

12. The method of claim 1,

wherein the DCI scheduling the at least one PDSCH includes a field indicating a HARQ process number, and
wherein a number of bits of the field is based on the specific number of HARQ processes or the number of HARQ processes for the specific BWP.

13. A user equipment (UE) in a wireless communication system, the UE comprising:

at least one transceiver for transmitting and receiving a wireless signal; and
at least one processor for controlling the at least one transceiver,
wherein the at least one processor configured to:

receive configuration information on a serving cell for configuring a plurality of bandwidth parts (BWPs) in which different numbers of hybrid automatic repeat request (HARQ) processes are set;
receive at least one physical downlink shared channel (PDSCH) in the serving cell; and
transmit HARQ-ACK information for the at least one PDSCH,
wherein, based on a specific HARQ-ACK codebook scheme being indicated to the UE, the HARQ-ACK information is determined based on a specific number of HARQ processes for the plurality of BWPs or a number of HARQ processes for a specific BWP among the plurality of BWPs.

14. A method performed by a base station in a wireless communication system, the method comprising:

transmitting configuration information on a serving cell for configuring a plurality of bandwidth parts (BWPs) in which different numbers of hybrid automatic repeat request (HARQ) processes are set;
transmitting at least one physical downlink shared channel (PDSCH) in the serving cell; and
receiving HARQ-ACK information for the at least one PDSCH,
wherein, based on a specific HARQ-ACK codebook scheme being indicated to a user equipment, the HARQ-ACK information is determined based on a specific number of HARQ processes for the plurality of BWPs or a number of HARQ processes for a specific BWP among the plurality of BWPs.

15. A base station in a wireless communication system, the base station comprising:

at least one transceiver; and
at least one processor coupled with the at least one transceiver,
wherein the at least one processor is configured to:

transmit configuration information on a serving cell for configuring a plurality of bandwidth parts (BWPs) in which different numbers of hybrid automatic repeat request (HARQ) processes are set;
transmit at least one physical downlink shared channel (PDSCH) in the serving cell; and
receive HARQ-ACK information for the at least one PDSCH,
wherein, based on a specific HARQ-ACK codebook scheme being indicated to a user equipment, the HARQ-ACK information is determined based on a specific number of HARQ processes for the plurality of BWPs or a number of HARQ processes for a specific BWP among the plurality of BWPs.

16. A processing apparatus configured to control a user equipment (UE) in a wireless communication system, the processing apparatus comprising:

at least one processor; and
at least one computer memory operably connected to the at least one processor and storing instructions that, based on being executed by the at least one processor, perform operations comprising:

receiving configuration information on a serving cell for configuring a plurality of bandwidth parts (BWPs) in which different numbers of hybrid automatic repeat request (HARQ) processes are set;
receiving at least one physical downlink shared channel (PDSCH) in the serving cell; and
transmitting HARQ-ACK information for the at least one PDSCH,
wherein, based on a specific HARQ-ACK codebook scheme being indicated to the UE, the HARQ-ACK information is determined based on a specific number of HARQ processes for the plurality of BWPs or a number of HARQ processes for a specific BWP among the plurality of BWPs.

17. At least one non-transitory computer-readable medium storing at least one instruction,
wherein the at least one instruction executable by at least one processor controls a device in a wireless communication system to:

receive configuration information on a serving cell for configuring a plurality of bandwidth parts (BWPs) in which different numbers of hybrid automatic repeat request (HARQ) processes are set;
receive at least one physical downlink shared channel (PDSCH) in the serving cell; and
transmit HARQ-ACK information for the at least one PDSCH,
wherein, based on a specific HARQ-ACK codebook scheme being indicated to the UE, the HARQ-ACK information is determined based on a specific number of HARQ processes for the plurality of BWPs or a number of HARQ processes for a specific BWP among the plurality of BWPs.

# FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Size depends
on subcarrier
spacing

Symbol

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

# FIG.5

Resource grid

A carrier
(up to 3300 subcarriers,i.e.,275 RBs)

A BWP

1 RB=12 subcarrier

1 RE

1 subcarrier

1 Symbol

l=0 · · · · ·

k=0

# FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601    S602    S603    S604    S605    S606    S607    S608

· DL/UL ACK/NACK
· UE CQI/PMI RI REPORT
  USING PUSCH AND PUCCH

# FIG.7

DL assingment-to-PDSCH offset(K0)

PDCCH

PDSCH

PUCCH

slot

PDSCH-to-HARQ-ACK reporting offset(K1)

# FIG.8

$a_0, a_1, \ldots a_{A-1}$

Transport block
FC layers

$b_0, b_1, \ldots b_{B-1}$

Code block segmentaion
Code block CRC attachment

$c_{r0}, c_{r1}, \ldots c_{r(K_r-1)}$

Channel coding

$d_{r0}^{(i)}, d_{r1}^{(i)}, \ldots d_{r(D_r-1)}^{(i)}$

Rate matching

$e_{r0}, e_{r1}, \ldots e_{r(E_r-1)}$

Code block
concatenation

$f_0, f_1, \ldots f_{G-1}$

CB CRC

TB CRC

Code block(CB)

Transport block(TB)

# FIG.9

```
┌────┐                                          ┌────┐
│ BS │                                          │ UE │
└────┘                                          └────┘
   │         The number of CBGs per TB             │ ── S1602
   │ ────────────────────────────────────────────►│
   │                                               │
   │         initial data transmission             │ ── S1604
   │ ────────────────────────────────────────────►│
   │                                               │
   │         CBG-based A/N feedback                 │ ── S1606
   │ ◄────────────────────────────────────────────│
   │                                               │
   │         CBG-based data transmission           │ ── S1608
   │ ────────────────────────────────────────────►│
   │                                               │
   ▼                                               ▼
```

CB group (CBG)

CB CRC                                    TB CRC

Code block(CB)

Transport block(TB)

# FIG.10

Base station                                                    UE

S1010

UE capability information

S1020

Configuration information on serving cell

S1030

Indicate Type-3 HARQ-ACK codebook

S1040

Report HARQ-ACK information

# FIG.11

START

Receive configuration information on
a serving cell in which
a plurality of BWPs configured ⟶ S1110

Receive at least one PDSCH
on the serving cell ⟶ S1120

Transmit HARQ-ACK information
for the at least one PDSCH ⟶ S1130

END

# FIG.12

START

Transmit configuration information on
a serving cell in which
a plurality of BWPs configured ⟶ S1210

Transmit at least one PDSCH
on the serving cell ⟶ S1220

Receive HARQ-ACK information
for the at least one PDSCH ⟶ S1230

END

# FIG.13

## INTERNATIONAL SEARCH REPORT

International application No.

**PCT/KR2022/021086**

### A. CLASSIFICATION OF SUBJECT MATTER

**H04L 1/18**(2006.01)i; **H04L 5/00**(2006.01)i

According to International Patent Classification (IPC) or to both national classification and IPC

### B. FIELDS SEARCHED

Minimum documentation searched (classification system followed by classification symbols)

H04L 1/18(2006.01); H04L 1/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: HARQ-ACK(hybrid automatic repeat request acknowledge), HARQ 프로세스 개수 (the number of HARQ processes), 최대(maximum), 대역폭 부분(bandwidth part, BWP), HARQ-ACK 코드북(codebook), 서브캐리어 간격(Subcarrier Spacing, SCS)

### C. DOCUMENTS CONSIDERED TO BE RELEVANT

| Category* | Citation of document, with indication, where appropriate, of the relevant passages | Relevant to claim No. |
|---|---|---|
| Y | WO 2021-187845 A1 (WILUS INSTITUTE OF STANDARDS AND TECHNOLOGY INC.) 23 September 2021 (2021-09-23)<br>See paragraphs [0096], [0098], [0120]-[0121], [0158]-[0164] and [0199]-[0200]. | 1-6,12-17 |
| A | | 7-11 |
| Y | MODERATOR (LG ELECTRONICS). Summary #4 of PDSCH/PUSCH enhancements (Scheduling/HARQ). R1-2112714, 3GPP TSG RAN WG1 Meeting #107-e, e-Meeting. 20 November 2021.<br>See section 3.6. | 1-6,12-17 |
| A | QUALCOMM INCORPORATED. PDSCH and PUSCH enhancements for 52.6-71GHz band. R1-2112207, 3GPP TSG RAN WG1 Meeting #107-e, e-Meeting. 06 November 2021.<br>See section 2.1.2.2. | 1-17 |
| DA | 3GPP; TSG RAN; NR; Physical layer procedures for control (Release 16). 3GPP TS 38.213 V16.8.0. 05 January 2022.<br>See section 9.1.4. | 1-17 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**28 March 2023** | Date of mailing of the international search report<br><br>**28 March 2023** |
| Name and mailing address of the ISA/KR<br><br>**Korean Intellectual Property Office<br>Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2022/021086** |

### C. DOCUMENTS CONSIDERED TO BE RELEVANT

| Category* | Citation of document, with indication, where appropriate, of the relevant passages | Relevant to claim No. |
|---|---|---|
| DA | 3GPP; TSG RAN; NR; Radio Resource Control (RRC) protocol specification (Release 16). 3GPP TS 38.331 V16.7.0. 23 December 2021.<br>See pages 514-516. | 1-17 |

Form PCT/ISA/210 (second sheet) (July 2022)

## INTERNATIONAL SEARCH REPORT
**Information on patent family members**

International application No.

**PCT/KR2022/021086**

| Patent document cited in search report | | | Publication date (day/month/year) | Patent family member(s) | Publication date (day/month/year) |
|---|---|---|---|---|---|
| WO | 2021-187845 | A1 | 23 September 2021 | None | |

Form PCT/ISA/210 (patent family annex) (July 2022)